# EUROPÄISCHE PATENTSCHRIFT

(11) **EP 3 291 972 B1**
(45) Veröffentlichungstag und Bekanntmachung des Hinweises auf die Patenterteilung: **13.01.2021**
(21) Anmeldenummer: 16748256.1
(22) Anmeldetag: 04.05.2016
(51) Int. Cl.: B29C 70/24, B29C 65/00, B29C 44/12, B29C 70/08, B32B 5/02, B29C 44/18, B32B 5/20, B32B 7/02, B32B 7/04, B32B 7/12, B32B 5/26, B32B 5/32

(54) **HYBRIDER, TEXTILVERSTÄRKTER MULTI-MATERIAL-VERBUNDWERKSTOFF UND VERFAHREN ZU SEINER HERSTELLUNG**
HYBRID, TEXTILE-REINFORCED MULTI-MATERIAL COMPOSITE MATERIAL AND METHOD FOR PRODUCING SAME
COMPOSITE HYBRIDE À MATÉRIAUX MULTIPLES RENFORCÉ PAR UN TEXTILE ET SON PROCÉDÉ DE FABRICATION

(30) Priorität: 04.05.2015 DE 102015005580
(43) Veröffentlichungstag der Anmeldung: 14.03.2018
(73) Patentinhaber: SKL Schwergewebekonfektion Lichtenstein GmbH, 09353 Oberlungwitz (DE); Pressless GmbH, 09557 Flöha (DE)
(72) Erfinder: HELBIG, Frank, 04618 Göpfersdorf (DE); MACH, Nico, 09573 Augustusburg/OT Erdmannsdorf (DE); SCHEIKA, Mike, 47441 Moers (DE); SCHÄFER, Kay, 09111 Chemnitz (DE); TRÖLTZSCH, Jürgen, 09112 Chemnitz (DE); KROLL, Lothar, 01324 Dresden (DE)
(74) Vertreter: Auerbach, Bettina
(86) Internationale Anmeldenummer: PCT/DE2016/000187
(87) Internationale Veröffentlichungsnummer: WO 2016/177357

(56) Entgegenhaltungen:
- EP-A2- 0 293 612
- FR-A1- 2 921 076

## Beschreibung

Die Erfindung betrifft einen hybriden, textilverstärkten Multi-Material-Verbundwerkstoff, bestehend aus räumlichen, dreidimensionalen Stützstrukturen, aus mit Textil verstärkten, flächigen, im Wesentlichen zweidimensional ausgebildeten, an die Stützstrukturen flankierend, peripher anschließenden Verbundstrukturen sowie aus geschäumten, porösen Materialien als Verbundkomponenten und unter anderem für den Einsatz in der Auto-und Sitzmöbelindustrie, im Karosseriebau und im Maschinenbau eignet sind.

Nach dem Stand der Technik sind vergleichsweise so genannte Sandwichbauteile allgemein bekannt. Allerdings sind die hierbei entstehenden Erzeugnisse und Strukturen und die damit verbundenen Herstellungsmethoden vornehmlich auf stoffschlüssige Verbindungen zwischen den Sandwichschalen und den Sandwichkernen ausgerichtet. Im Besonderen erfolgt die Zusammensetzung des Sandwichverbundes unter Verwendung ausschließlich einer einzelnen/eigenständigen Materialstruktur für den Sandwichkern, die entweder ein so genannter Wabenkern, der aus vorzugsweise Papier besteht (DE 102013013419 A1, DE 10201200838 A1, DE 102010005456 A1, DE 102009059805 A1), oder ein formstabiler Kunststoff- Hartschaumkern (DE 7907617U1) sein kann. Zur Verbindung einer Decklage mit einem Wabenkern sehen DE 102010005456 A1 und DE 102003059805 A1 eine Decklage bestehend aus einem thermoplastischen

Kunststoff bzw. thermoplastischen Faser-Kunststoff-Verbund vor, wobei durch äußeren Energieeintrag auf die vorbereitete Materialschichtung und zwar mittels Wärmezufuhr die thermoplastischen Komponenten/Komponentenbestandteile aufgeschmolzen/erweicht und durch Druckbelastung mit den Deckschicht berührenden Wabenkernstegen zur Verbindung gebracht. Dabei wird die Makrostruktur der Wabenkernstege in die aufgeschmolzenen thermoplastischen Bestandteile eingeprägt und von diesen aufgenommen. Eine mittelbare oder unmittelbare Hinwirkung von Faserverstärkungen beispielsweise aus der textilen Verstärkung des thermoplastischen Faser-Kunststoff-Verbundes auf die Ausprägung der verbindenden Kunststoff-Materialstruktur innerhalb der Fügezone zwischen Deck- und Kernschicht ist nicht beschrieben.
Die DE 790761 7 U1 bezieht sich auf einen Sandwichverbund unter Verwendung eines vorgefertigten Hartschaumkernes dessen Materialmikrostruktur innerhalb seiner vorgefertigten makroskopischen Formgeometrie vorab und unabhängig seiner Verarbeitung zum Sandwichverbund bereits eingeprägt ist. Die textilen Verstärkungen der Deckschichten werden im Verarbeitungsprozess zum Sandwichverbund mit der Zugabe einer viskosen, reaktiv vernetzenden Kunststoffkomponente von außen auf die Materialschichtung in Durchdringung der textilen Verstärkung und Anbindung des Sandwichkernes zum Faser-Kunststoff-Verbund vereint. Die Komponentenverteilung und Mikrostrukturierung der zugegebenen und verbindenden Kunststoffkomponente wird bedingungsgemäß im Durchdringen der textilen Verstärkungsstruktur von dieser beeinflusst. Eine unmittelbare, gezielt auf die Kunststoffverteilung steuernd wirksame Auslegung und Anordnung der textilen Mikrostrukturen erfolgt nicht. Die Ausprägung bzw. Ausfüllung der Füge- und Verbindungszone zwischen den textilen verstärkten Deckschichten und dem Schaumkern ist zudem maßgeblich abhängig von der Durchtrittsmenge des viskosen Kunststoffes aus der textilen Verstärkungsschicht an die Kontaktzone mit dem Schaumkern. Sowohl Übertritt als auch die Einbindung des viskosen Kunststoffes in den Schaumkern kann nicht gezielt erfolgen, was die wiederkehrende Beschaffenheit der notwendigen Fügezonenqualität regelmäßig nicht garantieren lässt.

Alle diese nach dem Stand der Technik beschriebenen Sandwichverbunde sind durch eine Kombination aus nicht textilen Volumengebilden für die Sandwichkerne und textilen Flächengebilden für die Deckflächen gekennzeichnet, mit der Besonderheit, dass die Sandwichkerne damit keine textilen Materialien und Strukturen enthalten. Die voluminösen Sandwichkerne bestehen somit im Inneren ausschließlich aus ihrer ursprünglich in die Verbunderstellung eingebrachte Material-und Werkstoffstruktur. Es entstehen in der Herstellung zum Sandwichverbund in Kombination und Verbindung weiterer Werkstoffe und Materialien daraus innerhalb der Sandwichkerne selbst keinerlei textilverstärkte Werkstoff- und Materialverbunde.

Sämtliche der benannten Produktstrukturen und dafür verwendeten Herstellungsweisen sind darüber hinaus davon gekennzeichnet, dass durch Schließen einer Formkavität daraus folgend mechanische/thermomechanische Energieeinträge von außen auf die Verarbeitungskomponenten wirksam werden müssen, um daraus die Verbindung der Komponenten zum Sandwichverbund herzustellen. Diese Verbundweisen sind energie- und zeitaufwendig und bedürfen in der Regel mehrerer Verfahrensstufen, welche mit einem weiteren kostenintensiven maschinentechnischen Aufwand verbunden sind.

Außerdem baut die Entstehung und Ausführung solcher Elemente oder Sandwichverbunde nach Stand der Technik auf der Wirkung von Kraft- und Formschluss zwischen den einzelnen Verarbeitungskomponenten auf.

Diese Wirksamkeit konzentriert sich insbesondere explizit auf die Grenzflächen, die sich jeweils in den unmittelbaren Kontaktzonen zwischen den zu verbindenden Komponenten befinden.
Im Bereich der hybriden Fügezone ist somit die Kompatibilität der formgebenden und formstabilisierenden Matrixwerkstoffe und der jeweiligen textilverstärkten Verbundkomponenten von entscheidender Bedeutung. Die Leistungsfähigkeit wie auch das Versagensverhalten bei Überbelastung solcher Fügezonen werden damit im Wesentlichen durch die Bindungskräfte der kraft- und stoffschlüssigen Anbindung in den makroskopisch eben ausgeprägten Grenzflächenbereichen unmittelbar zwischen formgebenden und formstabilisierenden Matrixwerkstoffen der zu fügenden Verbundkomponenten bestimmt. Der Grenzflächenübergang zwischen mindestens zwei zu verbindender Verbundkomponenten ist diskret, auf einen weitestgehend ebenen Anbindungsbereich begrenzt. In diskreten, ebenen Grenzflächenübergängen in diesen Anbindungsbereichen entstehende Materialspannungen haben bei Überbelastung genau in diesen Zonen hybrider Verbunde ein plötzliches, katastrophales Versagen zur Folge. Die gezielte Vermeidung diskreter Grenzflächenübergänge in hybriden textilverstärkten Verbundwerkstoffen und Verbundbauteilen bei gleichzeitigen Abbau der damit verbunden typischen Nachteile ihres Spannungsübertragungs-/Spannungsübergangsverhaltens gilt als wesentlicher Teil einer bisher ungelösten Problemstellung.

Eine weite Lösung für einen textilverstärkten Multi-Material-Verbundwerkstoff wird in der EP 0 293 612 A2 beschrieben. Dieser besteht aus einer synthetischen Kunststoffmatrix und einem Verstärkungselement, das aus Fasern besteht und das in die Matrix eingetaucht wird, um mechanische Spannungen aufnehmen zu können. Dabei ist der Faserverstärker in mindestens zwei gleichförmige Schichten unterteilt, die unter jeweils gegenüberliegenden Außenflächen angeordnet sind, welche das Strukturelement bilden, wobei das Strukturelement ein durchlässiges inneres Abstandselement aufweist, das einen hohen prozentualen Hohlraumanteil aufweist und so zwischen den Faserschichten angeordnet ist, dass es so weit wie möglich voneinander getrennt ist; wobei die Matrix aus Polymerschaum gebildet ist, durch den das innere Abstandselement vollständig durchdrungen ist und in dem das innere Abstandselement zusammen mit den Fasern eingetaucht ist, um ein monolithisches Ganzes zu bilden.
Mit dieser Lösung soll ein selbsttragendes Verbundelement, insbesondere für Fahrzeugkarosserien bereitgestellt werden, das eine unkomplizierte, kostengünstige Herstellung und eine gute Oberflächengüte mit einem ausgezeichneten Verhältnis von Festigkeit zu Gewicht kombiniert. Die angestrebte Festigkeit wird erreicht, in dem
in einer ersten Formhälfte ein dreidimensionaler Anker aus pflanzlichen, mineralischen oder synthetischen Fasern mit relativ langer Länge und in zufälliger, im Wesentlichen zweidimensionaler Weise gebildet wird, so dass die erste Schicht im Vergleich zum dreidimensionalen Zwischenelement, das auch aus flexiblem Material gebildet ist relativ dünn ist. Das Zwischenelement weist die gleiche Dicke wie das herzustellende Element auf, wobei der größten Teils seines Volumens durchlässig ist und eine Anzahl von miteinander kommunizierenden Hohlräume aufweist. Dieses Zwischenelement wird durch eine weitere Schicht, welche identisch ist mit der ersten Schicht, abgedeckt. Durch das Eingießen eines polymeren Schaums in den Formhohlraum während des Härtungsprozesses und durch Bilden von Gasblasen in einer Masse aus synthetischem Harz, insbesondere einem ungesättigten Polyesterharz werden alle Hohlräume in dem Anker gefüllt und diesen vollständig bedecken. Anschließend erfolgt das Platzieren einer zweiten Halbform über der ersten Halbform, die eine konjugierte Oberfläche aufweist, wobei die Form lang genug geschlossen ist, damit der Schaum aushärtet und so den dreidimensionalen Anker in die resultierende gehärtete Masse einbaut. Nachteil dieser Lösung ist das Fehlen einer ausreichenden kraft- und stoffschlüssigen Verbindung, um ein stabiles Verstärkungselement zu erhalten. Die Schaffung einer ausreichend stabilen Verbindung zwischen den beiden Halbformen während des Schäumungsprozesses, kann mit der hier aufgezeigten Art und Weise der Verfahrensschritte nicht fortwährend garantiert werden.

Es ist deshalb Aufgabe der Erfindung, die Nachteile des bekannten Standes der Technik für eine kraft und stoffschlüssige Verbindung eines Sandwichverbundes zu überwinden und eine Lösung zu schaffen, mit deren Hilfe ein vollständiger textilverstärkter Sandwichverbund über das gesamte Volumen vom Sandwichkern bis zu den Deckflächen die Anordnung der textilen Verstärkungsstrukturen und deren integrale volumetrische Ausfüllung und Verbindung mit der für in die Verstärkungsstrukturen einzubringen und einzutragenden Matrixmaterialien realisiert werden kann.

Weiterhin soll erreicht werden, das zum Zwecke der gesteuerten integralen Materialanhäufungen in Entstehung eines Multi-Material-Verbundes textile Strukturen gezielt auszuführen und in Kombination miteinander zu verarbeiten sind, um zwischen unterschiedlichen Verstärkungs- und Verbundkomponenten innerhalb eines Sandwichverbundes deren Verbindungsleistung über die nach Stand der Technik üblicherweise verwendeten Adhäsionsmechanismen von Kraft- und Stoffschluss hinaus miteinander stärker und dauerbelastbarer auszuführen, insbesondere durch gezielte Einrichtung eines Phasenübergangsbereiches für den mikromechanischen Formschluss.
Die Harmonisierung des Spannungsübertragungs-/Spannungsübergangsverhaltens zwischen den verschiedenen Verbundschichten/Verbundphasen hybrider Verbunde einer allmählichen, vergleichmäßigten, strukturell gezielt einstellbaren Materialeigenschaftsveränderung zur Vermeidung diskreter Grenzflächenübergänge in hybriden textilverstärkten Verbundwerkstoffen und Verbundbauteilen bei gleichzeitigem Abbau der damit verbunden typischen Nachteile ihres Verhaltens unter Belastung ist wesentlicher Teil der durch die Erfindung zu lösenden Aufgabe.

Erfindungsgemäß wird die Aufgabe durch die in den Ansprüchen 1 bis 8 beschriebenen Merkmalen gelöst, wobei die vorteilhaften Ausgestaltungen in den Unteransprüchen beschrieben sind.

Anisotrope Verbundwerkstoffeigenschaften und damit einhergehendes Werkstoffverhalten zur Steigerung spezifischer, gerichteter Werkstoffkennwerte wird den textilverstärkten Verbundwerkstoffen maßgeblich durch gezielte Ausrichtung von Fasern in hierfür vorgefertigten, vorwiegend biegeschlaffen flächenförmigen (2D-) und dreidimensionalen (3D-) textilen Makrostrukturen wie z.B. Bänder, Gewebe, Gelege, Gewirke, Gestricke, Geflechte und dergleichen eingeprägt.

Die Substanzausnutzung der textilen Verstärkungsstrukturen und die daraus resultierende mechanische Leistungsfähigkeit in damit textilverstärkten Verbundwerkstoffen folgen im Allgemeinen aus der stoff- und kraftschlüssigen Verbindung zwischen Steifigkeit und Festigkeit bestimmenden Verstärkungsfasern, den textilen Mikrostrukturen sowie Formgebung und Formstabilität liefernden Matrixkomponenten. Mithin ist die unmittelbare Anbindung der Verbundkomponenten an den Grenzflächen zwischen Faser und Matrix, die so genannte Faser-Matrix-Haftung, bestimmend für die Verbundwerkstoffleistung.

Um einen solchen Verbundwerkstoff herzustellen, ist die Kompatibilität der verwendeten Werkstoffe für Matrix- und textile Verstärkungsanteile in einem jeweiligen textilverstärkten Verbundwerkstoff zu gewährleisten. Entsprechende Modifikationen und Funktionalisierungen von Werkstoffen und Werkstoffoberflächen für Matrix- und textile Verstärkungsanteile sind nach Stand der Technik umfassend verfügbar und in Anwendung. Um die unmittelbare Anbindung zwischen den Verbundkomponenten in allen Bereichen der Anhäufung textiler Verstärkungsstrukturen zu erreichen, müssen die textilen Mikrostrukturen an ihren Oberflächen vollständig mit Matrixkomponenten in Berührung kommen. Folglich müssen die Zwischenräume der textilen Mikrostrukturen, die Mikroporosität von den eingetragenen Matrixkomponenten vollständig durchdrungen und so zur Ausfüllung gebracht werden, dass möglichst alle textilen Oberflächen mit diesen Matrixmaterialien in Berührung, Anbindung und Haftung kommen.

Gemäß diesem Anforderungsprofil werden die Verbundkomponenten, die später zu einem hybriden Multi-Material-Verbundwerkstoff z.B. Sandwichverbund vereint werden sollen, in entsprechenden vorstufigen Herstellungsschritten zu jeweils in sich geschlossenen Verbundwerkstoffen vorgefertigt.

Die zum hybriden Multi-Material-Verbundwerkstoff zu fügenden Verbundkomponenten halten mindestens im Kontaktbereich ihrer Anbindung mit einer weiteren Verbundkomponente mikroporöse textile Strukturanteile bereit. Die Strukturordnung der mikroporösen textilen Verstärkung einer jeweiligen hybriden Verbundkomponente im Kontakt- und Anbindebereich kann dabei identisch der gezielt gewählten Strukturordnung im Inneren der jeweiligen hybriden Verbundkomponente sein. Die Strukturordnung der textilen Verstärkungen einzelner, zum hybriden Multi-Material-Verbundwerkstoff zueinander zu verbindender Verbundkomponenten kann grundsätzlich unterschiedlich sein. Die (Mikro-)Porosität dieser textilen Strukturanteile beiderseits der Kontakt- und Anbindebereiche ist so gestaltet, dass sie von formgebenden und formstabilisierenden Matrixkomponenten durchströmt und allseitig von diesen umschlossen werden kann. Grundsätzlich werden die (Mikro-)Porositäten solcher textilen Strukturanteile nach deren Volumenanteilen und ihren geometrischen Ausprägungen charakterisiert.

Mit der Ausfüllung der Mikroporen textiler Anteile von Verstärkungskomponenten erfolgt zwischen den hybriden Verbundkomponenten über die durchflutenden Matrixkomponenten in den Phasenübergangsbereichen ein mikromechanischer Formschluss mit den textilen Strukturanteilen. Der Erstreckungsbereich des üblicherweise nach dem Stand der Technik flächigen Grenzübergangs zur Anbindung zwischen den hybriden Verbundkomponenten wird damit effektiv auf einen räumlichen Phasenübergangsbereich erweitert.

Unter Einhaltung der nach dem Stand der Technik bekannten Forderung zur Kompatibilität zwischen den einzelnen Matrix- und textilen Verstärkungswerkstoffen erweitert sich die Fügezone im räumlichen Phasenübergangsbereich und damit die Anbindung zwischen den hybriden Verbundkomponenten über den Kraft- und Stoffschluss hinaus um einen, dem hybriden Multi-Material-Verbund inhärenten mikromechanischen Formschluss. Durch Übertritt mindestens eines Anteils eines Matrixwerkstoffes aus einer der beiden zu fügenden Verbundkomponenten in den Bereich der textilen Verstärkung einer weiteren dazu zu fügenden Verbundkomponente resultiert für den hybriden Multi-Material-Verbund ein gradierter Phasenübergang und damit eine Harmonisierung im Anbindungsbereich des sich räumlich erstreckenden Phasenübergangsbereiches im Sinne mechanischer Beanspruchbarkeit.

### Matrixwerkstoffe

Als Matrixwerkstoffe lassen sich gemäß der Erfindung sämtliche Werkstoffe verwenden, die im Allgemeinen in faser- und textilverstärkten Verbunden zur Anwendung kommen. Dies umfasst Metalle, anorganische mineralische, natürliche Werkstoffe (z.B. Basalt), anorganische synthetische Werkstoffe (z.B. Glas) wie organische Werkstoffe, insbesondere Kunststoffe. Es gilt als vorteilhaft, wenn es sich bei den Matrixwerkstoffen um organische synthetische Werkstoffe, insbesondere Kunststoffe handelt. Dies beinhaltet insbesondere die als Thermoplaste und Duroplaste allgemein bekannten Kunststoffe.

Es ist von besonderem Vorteil, wenn es sich bei den Matrixwerkstoffen um teilvernetzte bzw. vernetze Kunststoffe wie thermoplastische Elastomere bzw. Duromere oder Duroplaste handelt.

Grundsätzlich ist es für Matrixwerkstoffe zur Herstellung faser- und textilverstärkter hybrider Verbunde gemäß der Erfindung von Vorteil, wenn deren Viskosität variabel einstellbar ist. Weiterhin ist es von Vorteil, wenn die Viskosität von Matrixkomponenten zu Beginn einer Verbundherstellung besonders niedrig eingestellt werden kann, die Matrix also einen mindestens zähflüssigen, besser dünnflüssigen Aggregatzustand einnimmt, und die Matrixkomponenten zum Ende einer Verbundherstellung zur Konsolidierung gebracht werden können, dass deren Viskosität potenziell ansteigt und sie damit in einen festen Aggregatzustand überführt werden.

Es gilt als vorteilhaft, wenn die Matrixwerkstoffe selbst wie auch in Verbindung mit Faser- oder Textilverstärkung in zellulare Werkstoff-und Materialstrukturen gebracht werden können bzw. zu solchen verarbeitbar sind. Hierbei ist diese Verarbeitungsfähigkeit solcher Matrixwerkstoffe zu zellularen Materialien unabhängig davon, ob diese poröse Materialstruktur auf Grundlage eines reaktiven oder eines nicht reaktiven, eines chemischen, eines chemisch-physikalischen oder physikalischen Prozesses entsteht. Derartige poröse Matrixmaterialien entstehen z.B. durch den Einsatz von Materialkomponenten, die bei ihrer Zusammenführung und Vermischung unmittelbar einen reaktiven Prozess auslösen, der zur Herausbildung einer Matrixkomponente selbst und damit direkt verbunden zur Entstehung von Gasen führt. Ähnliche poröse Matrixmaterialien entstehen z.B. durch anteilige Beimischung zusätzlicher reaktionsfähiger Komponenten in Matrixkomponenten, die durch physikalische Beanspruchung, vorzugsweise durch Druck- und Temperaturänderung, in Ausbreitung der Matrixkomponente selbst gleichzeitig aus den anteilig beigemischten Komponenten Gase entstehen und sich ausbreiten lassen. Weiterhin lassen sich z.B. solche poröse Matrixmaterialien herstellen, indem die Ausbreitung der Matrixwerkstoffe selbst unmittelbar mit der direkten Eintragung von Gasen gekoppelt wird.

In jedem der genannten Beispiele dient das Vorhandensein von Gasen in Entstehung und Ausbreitung von Matrixkomponenten als Treibmittel, die zur Ausprägung einer Porosität in Matrixwerkstoffen führt und gleichzeitig in Sache der Erfindung zu einer gezielten Viskositätsanpassung der dünn- bis zähflüssigen Matrixkomponenten im Verlauf seiner Ausbreitung.

Für die erfindungsgemäß verwendungsfähigen Matrixwerkstoffe ist es im Wesentlichen gleich bedeutend, wenn die zellulare, poröse Struktur einer Matrix in hybriden Verbunden durch Entstehung von Gasen aus Reaktionsgemischen, aus denen nach Abschluss der Reaktion die Matrix selbst entsteht, oder durch Entstehung von Gasen aus Reaktionsgemischen, die einzutragenden Matrixkomponenten beigemischt werden, oder durch direkten Eintrag zusätzlicher liquider oder fluider Komponenten während des Eintrages und der Ausbreitung von Matrixkomponenten entsteht. Es gilt gemäß der Erfindung insofern als besonders vorteilhaft, wenn es sich bei den für die Entstehung eines hybriden textilverstärkten Verbundwerkstoffes oder Verbundbauteiles verwendeten Matrixmaterialien um teilvernetzte bzw. vernetze Kunststoffe wie thermoplastische Elastomere bzw. Duromere oder Duroplaste handelt, bei denen die Ausprägung der Porosität der Matrixmaterialien unmittelbar in Verbindung mit der Entstehung und Ausbreitung von Gasen durch reaktive Prozesse innerhalb der sich ausbreitenden, Matrix bildenden Verbundkomponenten stattfindet.

### Textile Verstärkungskomponenten der Hybridverbunde

Für Verstärkungsfasern können sämtliche Werkstoffe verwendet werden, die herkömmlich in faser- und textilverstärkten Verbunden zur Anwendung kommen. Grundsätzlich ist es für Verstärkungsfasern von Vorteil, wenn sie aus Werkstoffen bestehen, die unter den im Verlauf einer Verbundherstellung und dabei herrschender physikalischer Bedingungen gar keine oder nur bedingt, jedoch keine maßgeblichen mikro- und makrostrukturellen Veränderungen erfahren.

Für den hybriden Verbund ist es von Vorteil, wenn die oberflächenden äußeren Phasenübergangsbereichen nahen textilen Verstärkungen als flächenförmige, mikroporöse Konstruktionen aus Fasern, Filamenten und daraus hergestellten Garnen bestehen. In Sache der Erfindung ist es von besonderem Vorteil, wenn diese flächenförmigen mikroporösen textilen Konstruktionen in ihrer Ausbreitung in Breite und Länge der Breiten- und Längenerstreckung der Phasenübergangsbereiche im hybriden Verbund folgen.

Für den hybriden Verbund ist es weiterhin von Vorteil, wenn die von den oberflächennahen Phasenübergangsbereichen weiter entfernten textilen Verstärkungen aus Fasern, Filamenten und daraus hergestellten Garnen bestehende, voluminöse räumliche Strukturen bilden, die eine makroskopische Porosität aufweisen, wobei die Haupterstreckung der Fasern, Filamente und Garne dieser räumlichen textilen Verstärkung quer, vorzugsweise senkrecht zur Breiten- und Längenerstreckung der Phasenübergangsbereiche verlaufen. Von besonderem Vorteil ist es, wenn die Enden der quer zur Breiten- und Längenerstreckung der Phasenübergangsbereiche verlaufenden Fasern, Filamente und Garne solcher räumlicher textiler Verstärkungen selbst durch mikroporöse aus Fasern, Filamenten und daraus hergestellten Garnen bestehende textile Strukturen verbunden sind.

In Sache der Erfindung gilt es als besonders vorteilhaft, wenn die mikroporösen textilen Strukturen der Verbindungen Makroporosität bildender, quer zur Breiten- und Längenerstreckung der Phasenübergangsbereiche verlaufender Fasern, Filamente und Garne solcher räumlicher textiler Verstärkungen in den Phasenübergangsbereichen der hybriden Verbunde in unmittelbarer Nähe von flächenförmigen mikroporösen textilen Konstruktionen benachbarter Verstärkungs- und Verbundkomponenten angeordnet sind.

### Gestaltung der Verbundkomponenten/-strukturen

Grundsätzlich können sich die Mikro- und Makrostrukturordnungen der Verstärkungsfaserkomponenten/-strukturen in den miteinander zu verbindenden Verbundkomponenten und damit auch im räumlichen Phasenübergangsbereich ihrer Anbindung zum hybriden Multi-Material-Verbundwerkstoff voneinander deutlich unterscheiden. Weiterhin kann sich im räumlichen Phasenübergangsbereich der Anbindung damit auch die (Mikro-) Porosität der Anteile textiler Verstärkungskomponenten voneinander unterscheiden. Vorzugsweise ist die (Mikro-)Porosität der Anteile textiler Verstärkungskomponenten im räumlichen Phasenübergangsbereich der Anbindung jedoch ähnlich gestaltet. Es gilt als besonders vorteilhaft, wenn die jeweilige Porosität der textilen Mikrostrukturen im räumlichen Phasenübergangsbereich der Anbindung in ihren Volumenanteilen und ihren geometrischen Ausprägungen identisch sind.

Grundsätzlich kann die Porosität der textilen Verstärkungskomponenten jeweiliger einzelner Verbundkomponenten innerhalb der Makrostrukturordnung weitestgehend gleich sein. Es gilt jedoch als vorteilhaft, wenn sich die Porosität in den Anteilen textiler Verstärkungskomponenten mit zunehmender Entfernung vom räumlichen Phasenübergangsbereich der Anbindung allmählich verändert. Dabei kann die Veränderung sowohl in Form einer Verringerung als auch in Form einer Vergrößerung der Porosität der jeweiligen textilen Verstärkungskomponenten vorliegen. Für hybride Sandwichverbunde mit Formkernen ist es vorteilhaft, wenn sich die Porosität der textilen Verstärkung eines Formkernes mit zunehmender Entfernung vom räumlichen Phasenübergangsbereich der Anbindung vergrößert. Hieraus resultiert, dass zumindest der bei komplexen Beanspruchungsformen von Sandwichverbunden weniger spannungsbeladene Bauteilinnenbereich eine geringere Masseheladung im Multi-Material-Verbundwerkstoff durch textile Verstärkungskomponenten erfährt und sich damit der Leichtbaugrad in Multi-Material-Sandwichverbunden strukturmechanisch gezielt steigern lässt.

Grundsätzlich kann die Ausprägung der Porosität textiler Verstärkungskomponenten zufällig und willkürlich sein. Bedingungsgemäß für eine zielgerichtete Einstellung und Einrichtung anisotroper Multi-Material-Verbundwerkstoffeigenschaften ist die Ausrichtung der (Mikro-) Porosität der textilen Verstärkungskomponenten mittelbar abhängig von der Mikrostrukturordnung und -ausrichtung der textilen Verstärkungsmaterialien.

Es gilt als vorteilhaft, wenn die Porosität der textilen Verstärkungskomponenten im räumlichen Phasenübergangsbereich der Anbindung kanalförmige, gezielt vektoriell gerichtete Mikrostrukturbereiche aufweist.

Von besonderem Vorteil ist es, wenn die Ausprägung der kanalförmigen, gezielt vektoriell gerichteten Porosität der textilen Verstärkungskomponenten im räumlichen Phasenübergangsbereich mit der gezielten Ausrichtung und Strukturordnung der Verstärkungstextilien im Sinne der für größtmöglichen Leichtbaugrad geforderten Verstärkungsfaserorientierung in den zum hybriden Verbundwerkstoff zu verbindenden Verbundkomponenten korreliert.

### Gestaltung der Verbindungsweise zu hybriden textilverstärkten Verbundwerkstoffen

Die zu erzielende kraft-, stoff- und mikromechanisch formschlüssige Verbindung zwischen mindestens zwei textilverstärkten Verbundkomponenten kann dadurch erfolgen, indem vor ebener oder räumlicher, adaptiver Zusammenführung der Verbundkomponenten im Fügebereich mindestens auf eine der mikroporösen textilen Verstärkungskomponentenanteile ein dosierter Auftrag einer verbundwerkstoffkompatiblen Matrixkomponente vorgenommen wird, die mit ebener oder räumlicher Zusammenführung der textilverstärkten Verbundkomponenten zum oberflächennahen Kontakt im Fügebereich eine allseitige Ausfüllung der mittelbar umgebenden, mikroporösen textilen Verstärkungskomponentenanteile im sich räumlich erstreckenden Fügebereich bewirkt. Im Sinne einer integralen Fertigung eines hybriden textilverstärkten Verbundwerkstoffes oder Verbundbauteiles erfolgt die ebene oder räumliche Zusammenführung der textilverstärkten Verbundkomponenten zum oberflächennahen Kontakt im Fügebereich bevorzugt vor dem Eintrag der verbundwerkstoffkompatiblen, zur allseitigen Ausfüllung der mittelbar umgebenden, mikroporösen textilen Verstärkungskomponentenanteile im Fügebereich kraft-, stoff- und mikromechanisch formschlüssig verbindenden Matrixkomponente.

Es gilt als vorteilhaft, wenn eine der beiden textilen Verstärkungsstrukturen einer zum hybriden Verbund zu fügenden textilverstärkten Verbundkomponente bei ebener oder räumlicher Zusammenführung mit anderen umgebenden, textilverstärkten Verbundkomponenten zunächst keine Ausfüllung mit Matrixkomponenten auch in verhältnismäßig größerer Entfernung von den räumlichen Phasenübergangsbereichen ihrer Anbindung aufweist. Ebenso gilt es dabei als vorteilhaft, wenn die Porosität dieser mit Matrix zunächst ungefüllten textilen Verstärkungsstruktur in verhältnismäßig größerer Entfernung von den Fügebereichen eine höhere Porosität aufweist als in den räumlichen Phasenübergangsbereichen ihrer Anbindung zu den umgebenden und mit ihr zu verbindenden textilverstärkten Verbundkomponenten

Von besonderem Vorteil ist es dabei, wenn die Porosität der textilen Verstärkungskomponenten im räumlichen Phasenübergangsbereich der Anbindung kanalförmige, gezielt vektoriell gerichtete Mikrostrukturbereiche aufweist, die zu einer gerichteten Durchflutung mit Matrixanteilen aus den grenzflächennahen mikroporösen Verstärkungskomponentenanteilen der zunächst primär mit Matrix befüllten Verstärkungsstruktur in die daraus folgend sekundär zu befüllenden, grenzflächennahen, mikroporösen Verstärkungskomponentenanteile der mittels gleicher Matrix dazu anzubindenden, textilverstärkten Verbundkomponente führen.

Mittels dieser gezielten, als vorteilhaft beschriebenen Ausprägung von Porositäten der zu verbindenden textilen und textilverstärkten Verbundkomponenten in den Phasenübergangsbereichen wird durch deren Ausfüllung mit Matrixkomponenten in der Herstellung des hybriden Verbundwerkstoffes oder hybriden Verbundbauteiles eine Homogenisierung im hybriden Phasenübergang erreicht. Durch die beschriebene vorteilhafte Ausprägung der Komponenten werden so Materialspannungen, die durch den Fügeprozess zum Verbund in Phasenübergangsbereichen entstehen, im hybriden Verbund gleichmäßiger verteilt, bei Überbelastung im räumlich ausgeprägten Phasenübergang gleichmäßiger abgetragen und abgebaut und bewirken so ein allmähliches, gutmütiges Versagen im Falle von Überbelastungen.

### Gestaltung der Verarbeitungsweise

Durch Eintrag verbindender Matrixkomponenten und deren Verteilung in den porösen Bereichen werden die textilen und textilverstärkten Verbundkomponenten zu einem hybriden Verbundwerkstoff oder hybriden Verbundbauteil verarbeitet. Grundsätzlich ist die Verarbeitungsfähigkeit der textilen und textilverstärkten Verbundkomponenten unabhängig von Grad und Verteilung ihrer jeweiligen Porosität. Genauso ist die Ausprägung räumlicher Phasenübergangsbereiche in hybriden Fügezonen unabhängig davon, ob deren Herausbildung durch einen adaptiven oder einen integralen Verarbeitungs- und Fügeprozess erfolgt.

Bevorzugt erfolgt die Herausbildung und Ausprägung räumlicher, harmonisierter Phasenübergangsbereiche in hybriden Fügezonen durch integrale Verarbeitungsweisen.

Zur Verbindung aller in einer gemeinsamen Verarbeitungsumgebung gemäß der Erfindung gestalteten und angeordneten hybriden Verbundkomponenten erfolgt der Eintrag mindestens einer von zunächst niedriger Viskosität gekennzeichneten Matrix bildenden Verbundkomponente oder eines Matrix bildenden Komponenten- bzw. Reaktionsgemisches in die vorzugsweise Makroporosität aufweisenden Bereiche bis dahin zunächst ungefüllter textiler Verstärkungsstrukturen hybrider Verbundkomponenten, um weiter mit fortschreitender volumetrischer Ausfüllung in die Bereiche der in den räumlichen Phasenübergangsbereichen der Anbindung geringeren Mikroporosität textiler Verstärkungsstrukturen vorzudringen und nach kompakter oder zellularer Ausfüllung aller in der Anordnung/Anhäufung der in einer gemeinsamen Verarbeitungsumgebung befindlichen hybriden Verbundkomponenten enthaltenen Porosität durch zunehmendes reaktions-, chemisch-physikalisch oder physikalisch bedingtes Ansteigen der Viskosität bis zur Konsolidierung/Verfestigung die kraft-, stoff- und mikromechanisch formschlüssige Verbindung aller hybriden Verbundkomponenten entstehen zu lassen. Insbesondere bei zellularer Expansion der im Verlauf der formfüllenden und formstabilisierenden Ausfüllung in sich dabei mit zunehmender Viskosität verändernden matrixbildenden Verbundkomponenten erfolgt die Ausprägung der zellularen Porosität nach Konsolidierung solcher Matrixkomponenten selbst in Korrespondenz und Abhängigkeit der an jeweiligen Ausbreitungs-, Durchdringungs- und Verbindungsort enthaltenen Makro- und Mikroporosität dort befindlicher textiler Verstärkungs- und Verbundkomponenten. Gemäß der Erfindung erfolgt damit die gezielte und funktionale komponentenspezifische Einstellung der Raumdichten und damit des Leichtbaugrades in Verbindung mit der Ausprägung der verbundmechanischen Leistung unmittelbar, integral im Herstellungsprozess zum vollständigen hybriden Verbundwerkstoff bzw. hybriden Verbundbauteil.

Die Erfindung soll anhand eines Ausführungsbeispiels näher erläutert werden.

In der beigefügten Zeichnung zeigt:
- Figur 1:: einen schematischen Querschnitt der textilen Grundstruktur des Multi-Material-Verbundwerkstoffs;
- Figur 2:: einen schematischen Querschnitt eines hälftigen Teilbereichs der textilen Grundstruktur mit Anordnung der Matrixkomponente und Darstellung der Phasenübergangsbereiche im Multi-Material-Verbundwerkstoff;
- Figur 3:: einen schematischen Querschnitt der dreidimensionalen textilen Stützkonstruktion des Multi-Material-Verbundwerkstoffs mit Darstellung der von unterschiedlich strukturierten Anhäufungsdichten entsprechender Garne und Fasern gekennzeichneten, textiltechnisch vorbereiteten Funktionsbereichen;
- Figur 4:: einen schematischen Querschnitt der dreidimensionalen textilen Stützkonstruktion mit peripher angeordneter faserverstärkter Verbundstruktur und Anordnung der Matrixkomponente des Multi-Material-Verbundwerkstoffs sowie Darstellung der entstandenen Phasenübergangsbereiche in der Stützkonstruktion und in der Verbundstruktur mit unterschiedlichen, von den jeweiligen Anhäufungsdichten der textilen Strukturkomponenten abhängigen gesteuerten Raumdichtezonen darin enthaltener Matrixkomponente
- Figur 5:: einen schematischen Querschnitt der dreidimensionalen textilen Stützkonstruktion mit peripher angeordneter faserverstärkter Verbundstruktur und Anordnung der Matrixkomponente des Multi-Material-Verbundwerkstoffs sowie Darstellung der entstandenen Phasenübergangsbereiche in der Stützkonstruktion;
- Figur 6:: einen schematischen Querschnitt der doppelt übereinander angeordneten dreidimensionalen textilen Stützkonstruktion zwischen der peripher angeordneter faserverstärkter Verbundstruktur und Anordnung der Matrixkomponente im Multi-Material-Verbundwerkstoff und
- Figur 7:: einen schematischen Querschnitt der dreidimensionalen textilen Stützkonstruktion mit umlaufend peripher angeordneter faserverstärkter Verbundstruktur sowie Darstellung des Einbringens der Matrixkomponente in den kissenförmig ausgebildeten Multi-Material-Verbundwerkstoff.

### Ausführungsbeispiel 1:

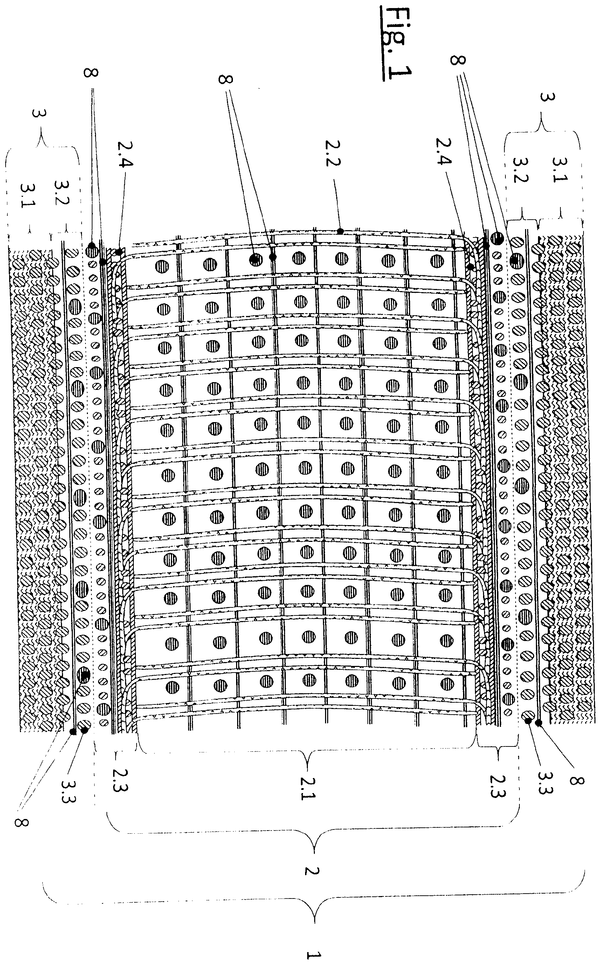

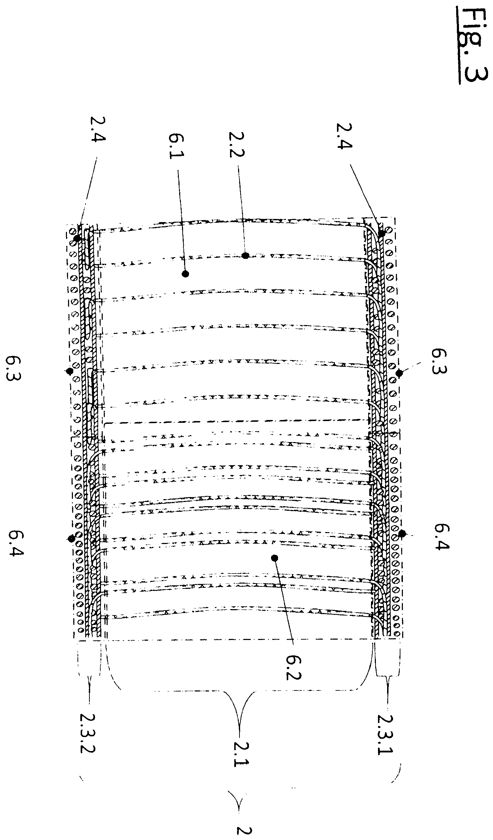

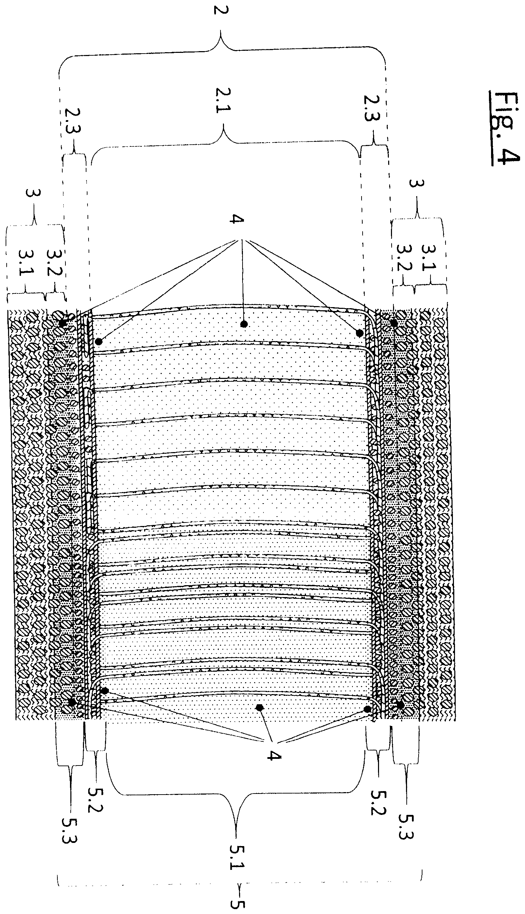

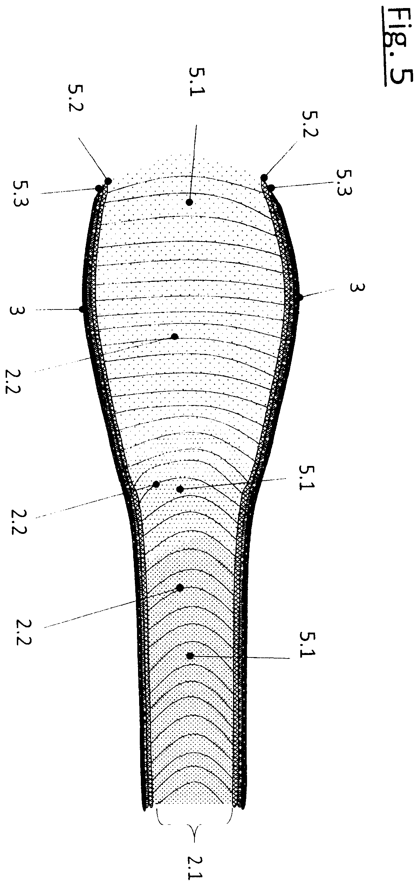

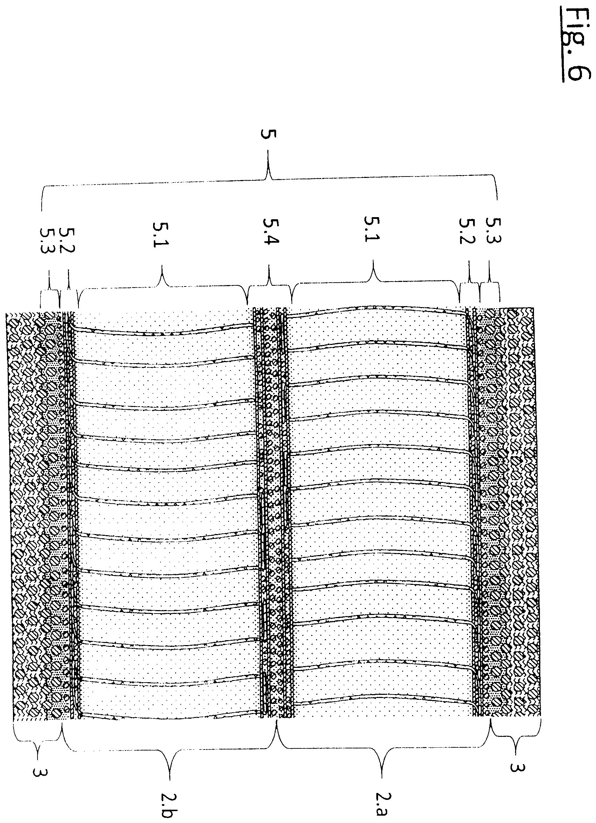

Gemäß der Figuren 1 bis 6 besteht ein erfindungsgemäßer hybrider Multi-Material-Verbundwerkstoff 1 aus einer vorgefertigten, dreidimensionalen, druckelastisch strukturstabilen, textilen Stützkonstruktion 2, ausgebildet als vorgefertigtes textiles Abstandsgewirk mit dessen einhergehenden unterschiedlichen Anordnungen textiler, mikroporöser Faser-und Garnanhäufungen sowie den Stützfasern 2.2 zwischen den äußeren textilen Deckflächenbereichen 2.3 mit den freiliegenden Faserbereichen aus Verbindungsfasern bzw. -garnen 2.4.

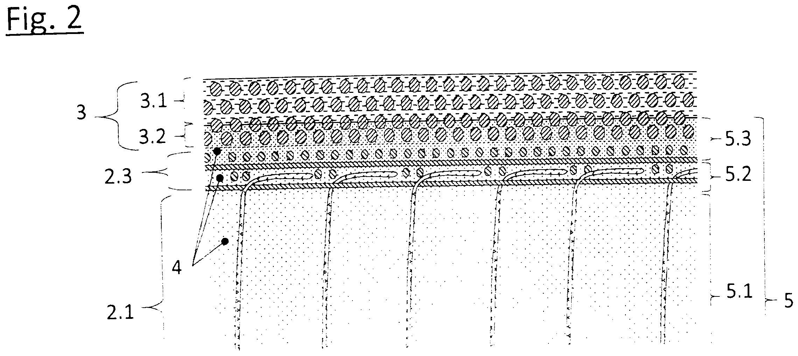

An diese beidseitig angeordneten Deckflächenbereiche 2.3 der Stützkonstruktion 2 sind jeweils vorgefertigte textilverstärkte Verbundstrukturen 3 angeordnet, welche im Anschlussbereich zum Deckflächenbereich 2.3 einen mikroporösen Innenbereich 3.2 aufweisen. Der den Multi-Material-Verbundwerkstoff 1 nach Außen abgrenzenden Bereich weist die faserverstärkten Verbundstrukturen 3 mit einem bedingt undurchlässigen Außenbereich 3.1 auf. Bedingt undurchlässigen bezieht sich auf die Gasdurchlässigkeit. Für Matrixmaterial 4 ist dieser Bereich undurchlässig. In die Stützkonstruktion wird nach dem Übereinanderlegen der einzelnen Faserlagen 2 und 3 eine expandierende, porös konsolidierende Matrixkomponente 4 mit geeigneter Spritztechnik so eingebracht, dass während der Expansion der Matrixkomponente 4 der gesamte verbleibende Volumenbereich der Stützkonstruktion bis zum verbleibenden Volumenbereich des mikroporösen Innenbereichs 3.2 der faserverstärkten Verbundstruktur 3 ausgefüllt ist. Auf Grund der unterschiedlichen Porosität der einzelnen textilen Strukturen 2 und 3 und insbesondere Strukturbereiche 2.3 und 3.2 der textilen Stützkonstruktionen 2 und der textilverstärkten Verbundkomponente 3 breitet sich die Matrixkomponente 4 mit unterschiedlicher Durchdringungskraft innerhalb der textilen Strukturen aus und bildet somit wiederum unterschiedliche Porosität in den einzelnen textildefinierten Bereichen 2.1, 2.3 und 3.2 als kraft-, stoff- und mikromechanisch formschlüssigen Phasenübergang 5 mit darin enthaltenen, mikrostrukturell harmonisierten Phasenübergangsbereichen 5.1 bis 5.n, wie sie in den Figuren 2, 4, 5 und 6 dargestellt sind, aus. Dieser Phasenübergang 5 mitseinen mikrostrukturell harmonisierten Phasenübergangsbereichen 5.1 bis 5.n weist einerseits einen volumenübergreifenden, an den Kontaktflächen von Matrix 4 und textilen Faser- und Garnkomponenten 2.2, 2.4, 3.3 und 8 allseits ausgebildeten Kraft- und Formschluss in allen textilen Lagen, hervorgerufen durch die Adhäsionskraft der an den Fasern anhaftenden Matrixkomponente 4 auf.

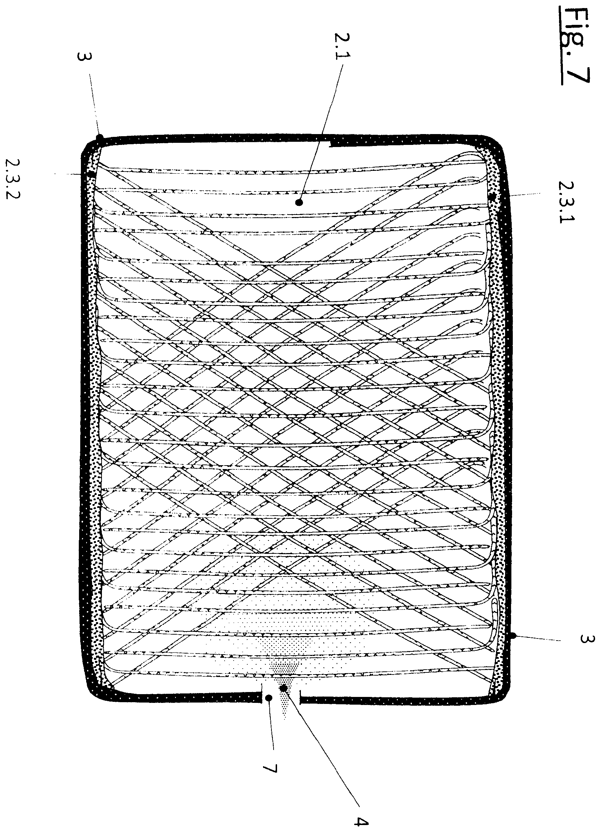

Andererseits wird durch die Matrixkomponente 4 in den Phasenübergangsbereichen 5.1 bis 5.n die Stützfunktion des Multi-Material-Verbundwerkstoff 1 in verschiedenen Funktionsbereichen 6.1 bis 6.n mit definiert. Die finale Formgebung des Multi-Material-Verbundwerkstoff 1 wird jedoch über die Porosität der Faserkonstruktionen 2.1, 2.3, 3.2 sowie 8 und durch die Stabilität der faserverstärkten Verbundstruktur 3.1 definiert. So kann der Multi-Material-Verbundwerkstoff 1 gemäß der Figur 7 auch als Kissenform ausgebildet sein, in dem die die Außenkontur bildende faserverstärkte Verbundstruktur 3.1 den textilen Strukturkern aus Stützkonstruktion mit Deckflächenbereich 2.3 und mikroporösem Innenbereich der Verbundstruktur 3 allseitig umschließt und somit einhüllt und die Matrixkomponente 4 über eine definierte Öffnung 7 in das Innere der Stützkonstruktion 2 eingespritzt wird.

### Bezugszeichenliste

- 1: Multi-Material-Verbundwerkstoff
- 2: dreidimensionale, druckelastisch verformbare, strukturstabile, textile Stützkonstruktion
- 2.1: Stützbereich
- 2.2: Stützfasern und -garne im Stützbereich (2.1)
- 2.3: Deckflächenbereich
- 2.4: Verbindungsfasern-und Verbindungsgarne im Deckflächenbereich (2.3)
- 3: faserverstärkte Verbundstruktur
- 3.1: Bedingt undurchlässiger Außenbereich der faserverstärkten Verbundstruktur (3)
- 3.2: Mikroporöser Innenbereich der faserverstärkten Verbundstruktur (3)
- 3.3: Freiliegende Fasern des Innenbereiches (3.2)
- 4: Expandierte, poröse Matrixkomponente
- 5: kraft-, stoff- und mikromechanisch formschlüssiger Phasenübergang
- 5.x: mikrostrukturell harmonisierter Phasenübergangsbereich Stützkonstruktion
- 6.x: Funktionsbereiche der dreidimensionalen in den
- 7: Öffnung zum Eintrag einer Matrixkomponente (4) Stützbereich (2.1) einer Stützstruktur (2) sowie
- 8: zusätzliche gerichtete Faserverstärkungen in 2.1, 2.3 3.2

## Patentansprüche

1. Hybrider, textilverstärkter Multi-Material-Verbundwerkstoff (1) bestehend aus räumlichen, dreidimensionalen Stützstrukturen, aus mit Textil verstärkten, flächigen, im Wesentlichen zweidimensional ausgebildeten, an die Stützstrukturen flankierend, peripher anschließenden Verbundstrukturen sowie aus geschäumten, porösen Materialien als Verbundkomponenten, wobei
- eine dreidimensional Stützkonstruktionen (2) als biegeschlaffe, elastisch verformbare, räumliche, textile Strukturen ausgebildet innerhalb des Multi-Material-Verbundwerkstoffs (1) zentral angeordnet ist,
- die an diese Stützkonstruktion (2) flankierend, peripher anschließenden Verbundstrukturen (3) des Multi-Material-Verbundwerkstoffs (1) als außenliegende, formstabilisierende, formgebende, faserverstärkte Verbundstruktur (3) mit mindestens einem bedingt undurchlässigen Außenbereich (3.1) sowie mindestens mit einem, darin freiliegende Fasern enthaltenden und damit einen bestimmten mikroporösen Strukturbereich aufweisenden Innenbereich (3.2) ausgebildet sind, bedingt undurchlässig bezieht sich auf die Gasdurchlässigkeit, für eine Matrixkomponente (4) ist der Außenbereich (3.1) undurchlässig,
- im Inneren des Multi-Material-Verbundwerkstoffes (1) zwischen den außenliegenden Verbundstrukturen (3) mindestens eine Lage einer ausgebildeten textilen biegeschlaffen, druckelastisch sowie strukturstabilen dreidimensionalen Stützkonstruktion (2) angeordnet ist, welche einen Stützbereich (2.1) mit aus Anordnung und Beschaffenheit von Stützfasern und -garnen (2.2) resultierender, bestimmter Porosität und aus mindestens einer, an den Stützbereich (2.1) anschließenden Seite einen die Stützfasern und -garne (2.2) textiltechnisch darin
anteilig aufnehmenden, für die Stützkonstruktion (2) formgebenden und formstabilisierenden aus Verbindungsfasern und -garnen (2.4) bestehenden Deckflächenbereiche (2.3) mit einer aus Anordnung und Beschaffenheit der Verbindungs- und Stützfasern und Verbindungs- und Stützgarnen resultierender, bestimmter Porosität aufweist,
- die Porosität der textilen Strukturanteile (3.2), (2.1) und (2.3) vom Stützbereich (2.1) der textilen Stützkonstruktion (2) über die Deckfiächenbereiche (2.3) zu den Innenbereichen (3.2) der flankierend sich peripher anschließender faserverstärkter Verbundstrukturen (3) im vorbestimmten Maße ihrer jeweils darin enthaltenen Anteile aus Fasern und Garnen gezielt sich verringernd ausgeführt ist,
- in derart vorbereitete Schichtung aus ausgebildeten biegeschlaffen, druckelastisch strukturstabilen, dreidimensionalen Stützkonstruktionen (2) und anschließender faserverstärkter Verbundstrukturen (3) mit peripher zur Stützkonstruktion (2) angeordnetem mikroporösem Innenbereich (3.2) eine nachträglich in diese Bereiche angeordnete Matrixkomponente (4) aus während und nach dem Eintrag sich expandierendem, porösem und sich selbstständig abbindendem Material, dessen Porosität sich proportional, in Abhängigkeit der Porositäten der in Expansion dieser Matrixkomponente (4) dabei durchdrungenen textilen Strukturbereiche (2.1, 2.3 und 3.2) gesteuert verringernd und diese Bereiche gleichzeitig verbindend enthalten ist,
- aus der Verbindung von textilen Strukturbereichen (2.1, 2.3, 3.2) mit der expandierten Matrixkomponente (4) kraft-, stoff- und mikromechanisch formschlüssige Phasenübergänge (5) mit jeweils mikrostrukturell harmonisierten, räumlich sich erstreckenden, aufeinanderfolgenden Phasenübergangsbereichen (5.1 bis 5.3) mit entsprechend ihren im Verbund gemeinsam proportional zunehmenden Anhäufungsdichten der Verbundkomponenten im volumetrisch vollständig, mit Textil verstärkten Verbundwerkstoff enthalten sind.

2. Hybrider, textilverstärkter Multi-Material-Verbundwerkstoff (1) nach dem Anspruch 1, **dadurch gekennzeichnet, dass** die Matrixkomponente aus Metallen sowie anorganischen, mineralischen, natürlichen Werkstoffen (z.B. Basalt) sowie anorganischen synthetischen Werkstoffen (z.B. Glas) sowie organischen Werkstoffe, insbesondere Kunststoffen besteht.

3. Hybrider, textilverstärkter Multi-Material-Verbundwerkstoff (1) nach einem der Ansprüche 1 und 2, **dadurch gekennzeichnet, dass**
innerhalb der textilen Strukturbereiche (2.1, 2.3, 3.2) volumetrisch makroskopisch und in Abhängigkeit der Ausprägung und Anordnung der textilen Komponenten gerichtete zusätzliche Faserverstärkungen (8) enthalten sind.

4. Hybrider, textilverstärkter Multi-Material-Verbundwerkstoff (1) nach einem der Ansprüche 1 bis 3, **dadurch gekennzeichnet, dass** die Stützkonstruktion (2) innerhalb des Multi-Material-Verbundwerkstoffes (1) in mehreren Lagen übereinander ausgebildet angeordnet ist.

5. Hybrider, textilverstärkter Multi-Material-Verbundwerkstoff (1) nach einem der Ansprüche 1 bis 4, **dadurch gekennzeichnet, dass** die flankierenden, peripher anschließenden, faserverstärkten Verbundstrukturen (3) den Multi-Material-Verbundwerkstoff (1) allseitig umschließen.

6. Hybrider, textilverstärkter Multi-Material-Verbundwerkstoff (1) nach einem der Ansprüche 1 bis 5, **dadurch gekennzeichnet, dass** der Stützbereich (2.1) innerhalb der biegeschlaffen Stützkonstruktion (2) durch die Wahl der Anzahl, Länge und Stärke von Stützfasern und -garnen (2.2) innerhalb eines Bereiches als textiles Abstandsgebilde mit bereits vorgewählten, funktional bedingten, unterschiedlichen Funktionsbereichen (6.1 - 6.n) unterschiedlich ausgebildet sind.

7. Hybrider, textilverstärkter Multi-Material-Verbundwerkstoff (1) nach einem der Ansprüche 1 bis 6, **dadurch gekennzeichnet, dass** die textilen Strukturbereiche (2.1, 2.3, 3.2) partiell und/oder lagenweise eine unterschiedliche Porosität und damit in Bezug auf die Matrixkomponenten (4) unterschiedliche Durchdringbarkeit aufweisen und somit ein unterschiedlich starker Verbund zwischen den benachbarten Verbundkomponenten/-lagen (2, 3) innerhalb des Verbundwerkstoffes ausgebildet ist.

8. Verfahren zur Herstellung eines hybriden, textilverstärkten Multi-Material-Verbundwerkstoff nach einem der Ansprüche 1 bis 7, wobei
zur Bildung von mikrostrukturell harmonisierten Phasenübergängen (5) innerhalb eines Multi-Material-Verbundwerkstoffes (1) mindestens eine Lage einer bereits ausgebildeten textilen hiegeschlaffen Stützkonstruktion (2) mit die Porosität des Stützbereiches (2.1) bestimmenden Anordnungen und Beschaffenheit von Stützfasern und -garnen (2.2) sowie die Porosität damit verbundener Deckflächen (2.3) bestimmenden Anordnung und Beschaffenheit von Verbindungsfasern und -garnen (2.4) zwischen zwei, die Außenkontur des Multi-Material-Verbundwerkstoffs bildenden textilverstärkten Verbundstrukturen (3) angeordnet wird, wobei sowohl die Stützkonstruktion (2) als auch die beiden textilverstärkten Verbundstrukturen (3) an den jeweiligen Berührungsflächen im Innenbereich (3.2) über freie, nicht eingebundene Fasern (3.3) verfügen, welche beim Positionieren der Verbundkomponenten/-lagen (2, 3) über die hierfür vorgesehenen Kontaktflächen in Berührung gebracht werden und durch das nachträgliche lokale Einbringen der Matrixkomponente (4) aus sich expandierendem und anschließend abbindendem Material in den Stützbereich (2.1) der biegeschlaffen Stützkonstruktion (2) diese Matrixkomponente (4) sowohl die Stützkonstruktion (2) mit seinen jeweils unterschiedlich porösen Stützbereichen (2.3) sowie Deckflächen (2.3) als auch die Innenbereiche (3.2) der textilverstärkten Verbundkomponenlen (3) mit sämtlichen darin freiliegenden Fasern (2.2, 2.4 und 3.3) vollständig bei dessen Expansion durchströmt und somit nach einer Konsolidierung der Matrixkomponenten (4) und dem Abbinden Matrixkomponenten (4), kraft-, stoff- und mikromechanisch formschlüssige, adhäsiv verbundene Phasenübergänge (5) in den Phasenübergangsbereichen (5.1 5.n) zwischen den Verbundkomponenten (2, 3 und 4) entstehen.

9. Verfahren zur Herstellung eines hybriden, textilverstärkten Multi-Material-Verbundwerkstoffes nach dem Anspruch 8, **dadurch gekennzeichnet, dass** nach dem Zusammenlegen der textilen Stützkonstruktion (2) und der faserverstärkten Verbundstruktur (3) eine auf die gewünschte Eigenschaft abgestimmte Matrixkomponenten (4) mit unterschiedlicher Porosität, Steifigkeit, Fließfähigkeit, Elastizität, in die Funktionsbereiche (6.1 - 6.n) eingebracht werden.

10. Verfahren zur Herstellung eines hybriden, textilverstärkten Multi-Material-Verbundwerkstoff nach einem der Ansprüche 8 und 9, **dadurch gekennzeichnet, dass** bei vollständig von textilverstärkten Verbundstrukturen 3 umschlossenen Komponentenanordnungen in mindestens einer der umschließenden textilverstärkten Verbundstrukturen (3) eine Öffnung (7) vorhanden ist, die den Eintrag der Matrixkomponente (4) direkt durch diese Öffnung in einen darin enthaltenem Stützbereich (2.3) einer Stützkonstruktion (2) gestattet.

## Claims

1. Hybrid, textile-reinforced multi-material composite (1) consisting of spatial, three-dimensional support structures, of textile-reinforced, flat, substantially two-dimensional composite structures flanking and peripherally adjoining the support structures, and of foamed, porous materials as composite components, wherein
- a three-dimensional support construction (2) designed as flexible, elastically deformable, spatial, textile structures is arranged centrally within the multi-material composite (1),
- the composite structures (3) of the multi-material composite (1) flanking and peripherally adjoining this support construction (2) are designed as an external, shape-stabilizing, shaping, fiber-reinforced composite structure (3) having at least one partially impermeable outer region (3.1) and at least having an inner region (3.2) containing exposed fibers and thus having a defined microporous structural region; partially impermeable refers to the gas permeability, for a matrix component (4) the outer region (3.1) is impermeable,
- at least one layer of a formed textile, flexible, pressure-resilient and structurally stable three-dimensional support construction (2) is arranged inside the multi-material composite (1) between the external composite structures (3), which layer comprises a support region (2.1) having a specific porosity resulting from the arrangement and nature of supporting fibers and yarns (2.2) and, from at least one side adjoining the support region (2.1), a top surface region (2.3) which consists of connecting fibers and yarns (2.4), proportionally incorporating the support fibers and yarns (2.2) in the textile, shapes and stabilizes the shape of the support construction (2), and has a specific porosity resulting from the arrangement and nature of the connecting and supporting fibers and connecting and supporting yarns,
- the porosity of the textile structural components (3.2), (2.1) and (2.3), from the support region (2.1) of the textile support construction (2) via the top surface regions (2.3) to the inner regions (3.2) of the flanking, peripherally adjoining fiber-reinforced composite structures (3), is designed to decrease in a targeted manner to the predetermined dimensions of its respective proportions of fibers and yarns contained therein,
- in such a layering of formed flexible, pressure-resiliently structurally stable, three-dimensional support constructions (2) and adjoining fiber-reinforced composite structures (3) having a microporous inner region (3.2) arranged peripherally with respect to the support construction (2), a matrix component (4) subsequently arranged in these regions and consisting of porous material that expands during entry and is self-setting after entry, the porosity of which material is proportionally reduced in a controlled manner, depending on the porosities of the textile structural regions (2.1, 2.3 and 3.2) penetrated by said matrix component (4) during expansion, and simultaneously connects these regions, is contained,
- from the connection of textile structural regions (2.1, 2.3, 3.2) to the expanded matrix component (4), force-fitting, integral and micromechanically form-fitting phase transitions (5) each having microstructurally harmonized, spatially extending, successive phase transition regions (5.1 to 5.3), correspondingly with the accumulation densities of the composite components proportionally increasing together in the composite, are contained in the fully volumetrically textile-reinforced composite.

2. Hybrid, textile-reinforced multi-material composite (1) according to claim 1, **characterized in that** the matrix component consists of metals and inorganic, mineral, natural materials (e.g. basalt) and inorganic synthetic materials (e.g. glass) and organic materials, in particular plastics materials.

3. Hybrid, textile-reinforced multi-material composite (1) according to either claim 1 or claim 2, **characterized in that** additional fiber reinforcements (8) which are oriented volumetrically macroscopically and depending on the characteristics and arrangement of the textile components are contained within the textile structural regions (2.1, 2.3, 3.2).

4. Hybrid, textile-reinforced multi-material composite (1) according to any of claims 1 to 3, **characterized in that** the support construction (2) is arranged in several layers one above the other within the multi-material composite (1).

5. Hybrid, textile-reinforced multi-material composite (1) according to any of claims 1 to 4, **characterized in that** the flanking, peripherally adjoining, fiber-reinforced composite structures (3) enclose the multi-material composite (1) on all sides.

6. Hybrid, textile-reinforced multi-material composite (1) according to any of claims 1 to 5, **characterized in that** the support region (2.1) within the flexible support construction (2) is designed in different ways, by the selection of the number, length and thickness of supporting fibers and yams (2.2) within a region, as a textile spacer structure having preselected, functionally determined, different functional regions (6.1, 6.n).

7. Hybrid, textile-reinforced multi-material composite (1) according to any of claims 1 to 6, **characterized in that** the textile structural regions (2.1, 2.3, 3.2) have a different porosity in part and/or in layers and therefore have different penetrability with regard to the matrix components (4) and thus a differently strong bond is formed between the adjacent composite components/layers (2, 3) within the composite.

8. Method for the production of a hybrid, textile-reinforced multi-material composite according to any of claims 1 to 7, wherein for the formation of microstructurally harmonized phase transitions (5) within a multi-material composite (1), at least one layer of a pre-formed textile flexible support construction (2) having an arrangement and nature of supporting fibers and yarns (2.2) that determines the porosity of the support region (2.1), as well as an arrangement and nature of connecting fibers and yarns (2.4) that determines the porosity of the top surfaces (2.3) connected thereto, is arranged between two textile-reinforced composite structures (3) forming the outer contour of the multi-material composite, wherein both the support construction (2) and the two textile-reinforced composite structures (3) have free, non-integrated fibers (3.3) on the respective contact surfaces in the inner region (3.2), which fibers, when the composite components/layers (2, 3) are positioned, are brought into contact via the contact surfaces provided for this purpose, and, due to the subsequent local introduction of the matrix component (4) made of expanding and then setting material into the support region (2.1) of the flexible support construction (2), said matrix component (4) completely flows through the support construction (2) having its differently porous support regions (2.3) and top surfaces (2.3) as well as the inner regions (3.2) of the textile-reinforced composite components (3) having all the fibers (2.2, 2.4 and 3.3) exposed therein during the expansion of said matrix component, and thus, after consolidation of the matrix components (4) and the setting of the matrix components (4), force-fitting, integral and micromechanically form-fitting, adhesively connected phase transitions (5) are produced in the phase transition regions (5.1 5.n) between the composite components (2, 3 and 4).

9. Method for the production of a hybrid, textile-reinforced multi-material composite according to claim 8, **characterized in that** after the textile support construction (2) and the fiber-reinforced composite structure (3) have been brought together, a matrix component (4) matched to the desired property and having different porosity, stiffness, flowability and/or elasticity is introduced into the functional regions (6.1-6.n).

10. Method for the production of a hybrid, textile-reinforced multi-material composite according to either claim 8 or claim 9, **characterized in that** in the case of component arrangements that are completely enclosed by textile-reinforced composite structures 3, an opening (7) is present in at least one of the enclosing textile-reinforced composite structures (3), which opening allows the entry of the matrix component (4) directly through this opening into a support region (2.3) of a support construction (2) contained therein.

## Revendications

1. Composite hybride à matériaux multiples (1) renforcé par un textile constitué de structures de support spatiales tridimensionnelles, de structures composites renforcées par un textile, plates, sensiblement bidimensionnelles flanquant et jouxtant la périphérie des structures de support, et de matériaux poreux en mousse sous forme de composants composites, dans lequel
- une construction de support (2) tridimensionnelle, réalisée sous forme de structures textiles spatiales flexibles, élastiquement déformables, est disposée au centre du composite à matériaux multiples (1),
- les structures composites (3) du composite à matériaux multiples (1) flanquant et jouxtant la périphérie de ladite construction de support (2) sont réalisées sous forme de structure composite (3) externe, de stabilisation de forme, de formage et renforcée par des fibres comportant au moins une zone externe (3.1) en partie imperméable et au moins une zone interne (3.2) contenant des fibres exposées et comportant ainsi une certaine zone de structure microporeuse, l'imperméabilité conditionnelle fait référence à la perméabilité au gaz, la zone externe (3.1) étant imperméable pour un composant de matrice (4),
- au moins une couche d'une construction de support (2) tridimensionnelle textile, flexible, élastique en compression et structurellement stable est disposée à l'intérieur du composite à matériaux multiples (1) entre les structures composites (3) externes, laquelle au moins une couche d'une construction de support comporte une zone de support (2.1) présentant une porosité spécifique résultant de l'agencement et de la qualité des fibres et fils de support (2.2) et comporte, à partir d'au moins un côté adjacent à la zone de support (2.1), une zone de surface de recouvrement (2.3) logeant proportionnellement les fibres et fils de support (2.2) grâce à la technologie textile, formant et stabilisant la forme de la construction de support (2), constituée de fibres et fils de liaison (2.4) présentant une certaine porosité résultant de l'agencement et de la qualité des fibres de liaison et de support et des fils de liaison et de support,
- la porosité des composants structurels textiles (3.2), (2.1) et (2.3) est conçue pour diminuer de la zone de support (2.1) de la construction de support (2) textile aux zones internes (3.2) des structures composites (3) renforcées par des fibres, flanquant et jouxtant la périphérie en passant par les zones de surface de recouvrement (2.3) dans l'étendue prédéfinie des proportions de fibres ou de fils qui y sont respectivement contenus, dans une stratification de constructions de support (2) tridimensionnelles formées, flexibles, élastiques en compression, structurellement stables et de structures composites (3) renforcées par des fibres, jouxtant la construction de support, comportant une zone interne (3.2) microporeuse disposée à la périphérie de la construction de support (2), un composant de matrice (4) disposé ultérieurement dans lesdites zones et constitué d'un matériau poreux à prise indépendante qui se dilate pendant et après l'insertion, dont la porosité est réduite proportionnellement de manière contrôlée en fonction des porosités des zones structurelles textiles (2.1, 2.3 et 3.2) pénétrées lors de la dilatation dudit composant de matrice (4), est contenu de manière à relier lesdites zones en même temps,
- à partir de la liaison des zones structurelles textiles (2.1, 2.3, 3.2) au composant de matrice (4) dilaté, des transitions de phase (5) par liaison de force, liaison de matière et par complémentarité de forme micromécanique avec des zones de transition de phase (5.1 à 5.3) respectivement successives, micro-structurellement harmonisées, s'étendant spatialement avec leurs densités d'accumulation des composants composites, qui ensemble augmentent proportionnellement dans le composite, sont contenues dans le composite entièrement volumétrique renforcé par un textile.

2. Composite hybride à matériaux multiples (1) renforcé par un textile selon la revendication 1, **caractérisé en ce que** le composant de matrice est constitué de métaux et de matériaux inorganiques, minéraux, naturels (par exemple le basalte) et de matériaux synthétiques inorganiques (par exemple le verre) et de matériaux organiques, en particulier de matières plastiques.

3. Composite hybride à matériaux multiples (1) renforcé par un textile selon l'une des revendications 1 et 2, **caractérisé en ce que** des renforcements de fibre (8) supplémentaires orientés de manière volumétrique et de manière macroscopique en fonction de l'expression et de l'agencement des composants textiles sont contenus dans les zones structurelles textiles (2.1, 2.3, 3.2).

4. Composite hybride à matériaux multiples (1) renforcé par un textile selon l'une des revendications 1 à 3, **caractérisé en ce que** la construction de support (2) est disposée en plusieurs couches les unes au-dessus des autres à l'intérieur du composite à matériaux multiples (1).

5. Composite hybride à matériaux multiples (1) renforcé par un textile selon l'une des revendications 1 à 4, **caractérisé en ce que** les structures composites (3) flanquant et jouxtant la périphérie et renforcées par des fibres entourent le composite à matériaux multiples (1) de tous côtés.

6. Composite hybride à matériaux multiples (1) renforcé par un textile selon l'une des revendications 1 à 5, **caractérisé en ce que** la zone de support (2.1) à l'intérieur de la construction de support (2) flexible est réalisée différemment par le choix du nombre, de la longueur et de l'épaisseur des fibres et fils de support (2.2) à l'intérieur d'une zone sous la forme d'une structure d'espacement textile comportant des zones fonctionnelles (6.1 6.n) différentes déjà présélectionnées et déterminées de manière fonctionnelle.

7. Composite hybride à matériaux multiples (1) renforcé par un textile selon l'une des revendications 1 à 6, **caractérisé en ce que** les zones structurelles textiles (2.1, 2.3, 3.2) présentent en partie et/ou par couches une porosité différente et donc une perméabilité différente par rapport aux composants de matrice (4) et ainsi une liaison différente plus forte est formée entre les composants/couches composites (2, 3) adjacents à l'intérieur du matériau composite.

8. Procédé de fabrication d'un composite hybride à matériaux multiples renforcé par un textile selon l'une des revendications à 7, dans lequel pour former des transitions de phase (5) micro-structurellement harmonisées à l'intérieur d'un composite à matériaux multiples (1), au moins une couche d'une construction de support (2) textile flexible, déjà réalisée présentant des agencements et une qualité de fibres et de fils de support (2.2) déterminant la porosité de la zone de support (2.1) ainsi que l'agencement et la qualité de fibres et de fils de liaison (2.4) déterminant la porosité des surfaces de recouvrement (2.3) qui y sont reliées est disposée entre deux structures composites (3) renforcées par des textiles qui forment le contour extérieur du composite à matériaux multiples, tant la construction de support (2) que les deux structures composites (3) renforcées par des textiles disposant au niveau des surfaces de contact respectives dans la zone interne (3.2) de fibres libres non liées (3. 3), qui sont mises en contact par les surfaces de contact prévues à cet effet lors du positionnement des composants/couches de grains composites (2, 3), et grâce à l'introduction locale ultérieure du composant de matrice (4) constitué d'un matériau d'expansion puis de liaison dans la zone de support (2.1) de la construction de support (2) flexible, ledit composant de matrice (4) s'écoule, entièrement lors de sa dilatation, à la fois à travers la construction de support (2) avec ses zones de support (2.3) et ses surfaces de recouvrement (2.3), chacune d'elles étant de porosité différente, et les zones internes (3. 2) des composants composites (3) renforcés par des textiles avec toutes les fibres (2.2, 2.4 et 3.3) qui y sont exposées, et ainsi, après la consolidation des composants de matrice (4) et la liaison des composants de matrice (4), des transitions de phase (5) reliées par liaison de force, par liaison de matière et par complémentarité de forme micromécanique, par adhérence, sont produites dans les zones de transition de phase (5.1 5.n) entre les composants composites (2, 3 et 4).

9. Procédé de fabrication d'un composite hybride à matériaux multiples renforcé par un textile selon la revendication 8, **caractérisé en ce que,** après assemblage de la construction de support (2) textile et de la structure composite (3) renforcée par des fibres, un composant de matrice (4) adapté à la propriété souhaitée et présentant différentes porosités, rigidités, fluidités, élasticités, est introduit dans les zones fonctionnelles (6.1-6.n).

10. Procédé de fabrication d'un composite hybride à matériaux multiples renforcé par un textile selon l'une des revendications 8 et 9, **caractérisé en ce que,** dans des agencements de composants entièrement entourés par des structures composites 3 renforcées par des textiles, une ouverture (7) est présente dans au moins l'une des structures composites (3) renforcées par des textiles qui les entourent, laquelle ouverture forme l'entrée du composant de matrice (4) directement à travers ladite ouverture dans une zone de support (2.3) d'une construction de support (2) qui y est contenue.
